# EUROPEAN PATENT SPECIFICATION

(11) **EP 0 624 125 B1**
(45) Date of publication and mention of the grant of the patent: **09.06.1999**
(21) Application number: 93904564.7
(22) Date of filing: 21.01.1993
(51) Int. Cl.: B32B 3/24, A43B 13/38, B32B 27/12, A43B 17/14

(54) **SLIP-RESISTANT, SHEET MATERIAL**
RUTSCHFESTES, BLATTFÖRMIGES MATERIAL
MATERIAU EN FEUILLES ANTIGLISSANT

(30) Priority: 31.01.1992 US 828690
(43) Date of publication of application: 17.11.1994
(73) Proprietor: OGDEN INC., Cincinnati, OH 45233 (US)
(72) Inventor: OGDEN, J. Michael, Cincinnati, OH 45233 (US)
(74) Representative: Findlay, Alice Rosemary
(86) International application number: PCT/US93/00546
(87) International publication number: WO 93/14927

(56) References cited:
- DE-A- 2 124 779
- DE-A- 3 627 538
- US-A- 1 994 681
- US-A- 4 223 458
- US-A- 4 602 442
- US-A- 4 845 862
- US-A- 4 925 724
- US-A- 5 216 825

## Description

This invention relates generally to slip-resistant sheet material, and, more particularly, to a sheet material comprising a laminate of a non-absorbent, thermally non-conductive top Layer formed with apertures, and a stabilizing layer which can be affixed to at least one other layer such as a barrier layer and/or a cushioning layer.

A large portion of the materials which we walk on, e.g., insoles of shoes, indoor carpeting, outdoor carpeting, floor mats, etc., have a basic construction which has remained essentially the same for a number of years. In most instances, such materials consist essentially of a top layer of fibrous cloth or fabric material which touches the foot, and a second layer of backing material connected to the top layer which, may or may not have cushioning properties. Despite improvements in certain aspects of these types of products such as wear life and comfort, little or no attention has been paid to characteristics such as slip-resistance and thermal conductivity.

US-A-4223458 discloses a shoe insole which aims to protect the user from athlete's foot, reduce foot fatigue and absorb foot odour. It comprises a coarse mesh-like woven cloth as a backing, a honeycomb-woven cloth, a sheet prepared by coating a latex containing activated carbon powder, copper powder and magnetic powder on a non-woven cloth and heat-treating the coated cloth, and a fine-woven cloth surface layer, the cloths being laminated in the above order, and welded at a peripheral edge.

US-A-4602442 describes a shoe insole which comprises a reinforcing woven polypropylene net needled to a non-woven fibre fleece on one side and laminated to a second non-woven fibre fleece by a polyethylene film on the other side.

In the design of insoles for shoes, and particularly insoles for athletic shoes or other active wear articles or footwear, an effort has been made to improve the cushioning characteristics of such insoles to enhance comfort. But the configuration and surface characteristics of such insoles have been ignored as they relate to the ability of the insole to maintain the foot and sock insulated from the sole of the article of footwear, and the extent to which the toot and sock are permitted to move within the article of footwear.

One problem with the sheet materials employed to fabricate insoles for active wear footwear involves a failure to control the motion of the sock of the wearer relative to the insole and/or the motion of the foot of the wearer with respect to the sock. This affects both the comfort and performance of the shoe. For example, certain activities such as the play of tennis on clay courts and soccer on grass result in substantial movement of the shoe with respect to the playing surface. In these types of activities, it is desirable to limit the movement of the foot and sock with respect to the insole of the article of footwear for added comfort and to optimize the performance of the footwear. On the other hand, comfort and performance dictate that the foot and sock be permitted more movement within articles of footwear intended for use on high friction surfaces such as lacquered hardwood floors or artificial playing fields wherein limited movement of the article of footwear relative to the playing surface is permitted, and therefore relatively high shear forces are transmitted from the shoe to the foot.

Prior art insoles can generally be divided into two categories, both of which fail to take into account the movement of the foot and/or sock within the article of footwear and the type of surface on which the footwear is utilized. In some designs, the top surface of such insoles is formed of a tacky or sticky sheet material, or a material which becomes relatively tacky when exposed to moisture from the foot. Insoles of this type exhibit a higher coefficient of friction than the coefficient of friction of the skin of the foot. As a result, the magnitude of the frictional engagement between the sock and the sheet material at the top of the insole is greater than the magnitude of the frictional engagement between the foot and sock. Articles of footwear provided with insoles having this type of material have been found to create blisters on the foot during use because the foot is allowed to move within the sock in response to the application of a shear force, i.e., a front-to-rear and/or a side-to-side foot motion, while the sock is held in an essentially fixed position atop the insole. The rubbing motion of the foot within the sock can create severe blistering and discomfort, particularly in activities such as basketball, racquetball, aerobics and the like played on hardwood floors which permit limited motion of the shoe therealong.

Another general category of insole designs comprises a rubber or foam bottom layer which is covered by an overlayer of cloth or synthetic sheet material having a relatively slippery or slick surface with a much lower coefficient of friction compared to that of the skin. Insoles of this type help avoid the blistering problem because the foot and sock can move as a unit relative to the slippery top layer of the insole, instead of the foot moving within the sock. But the problem with these insoles is that movement of the sock and foot of the wearer is often completely unrestricted by the material forming the top layer thereof, and the toes are permitted to violently slide into the toe portion of the article of footwear causing bruising or even fractures. In addition, undue movement of the foot and sock gives the wearer a feeling of lack of control of the footwear, particularly in activities where the footwear readily slides along the playing surface.

Problems with slip-resistance and thermal insulation are also prevalent in sheet-type products other than insoles, e.g., indoor-outdoor carpeting; floor coverings for boats, campers, swimming pool decks, etc.; floor mats, and other items. In many products of this type, the surface which comes into contact with the foot has limited slip resistance and can become particularly slippery and hazardous when wet. Additionally, sheet materials used for different types of floor coverings or the like often provide only limited thermal insulation to protect the feet from the heat or cold of the surface upon which the sheet material rests.

These problems have been addressed in U.S. Patent Nos. 4,893,418 and 4,925,724, owned by the assignee of this invention. The sheet material disclosed in the 4,925,724 patent comprises a bottom layer formed of a cushioning material such as rubber or foamed plastic having an upper surface and a lower surface. The top layer of the sheet material is formed or a non-absorbent, thermally non-conductive thermoplastic material having a plurality of apertures which define intersecting columns and rows of thermoplastic strands or wall sections. The top layer is at least partially embedded in the bottom, cushioning layer so that a portion or the top layer extends beneath the upper surface of the bottom layer and the cushioning material forming the bottom layer at least partially enters the apertures in the top layer.

As discussed in US Patent No. 4,925,724, the thermoplastic material forming the top layer of the sheet material can be varied to alter the coefficient of friction, as desired. When used to manufacture an insole, such sheet material exhibits frictional characteristics which are effective to control the movement of the foot and sock within an article of footwear. In particular, the coefficient of friction of the apertured top layer of the sheet material is chosen such that the magnitude of the frictional engagement between the sock and such top layer is less than the magnitude of the frictional engagement between the foot and sock. This is type whether the sheet material is wet or dry. As a result, the root and sock move together as a unit with respect to the top layer of an insole formed with such sheet material in response to the application of a shear force to the foot, thus preventing the blistering problem caused by prior insoles mentioned above. Additionally, the coefficient of friction of such top layer of the sheet material is chosen to provide at least some slip-resistance where the article of footwear is intended for use on playing surfaces with a high coefficient of friction (hardwood floor, artificial fields) and a somewhat greater slip-resistance where the article of footwear is intended for use on surfaces having a lower coefficient of friction (clay tennis courts, grass fields, etc.).

While the sheet material disclosed in US Patent No. 4,925,724 provides a number of advantages, it has been found that some potential problems can arise with the use of such materials to form insoles for articles of footwear, indoor-outdoor carpeting, floor mats and other items. As mentioned above, the apertures in the top layer of the sheet material form a matrix of interconnected wall sections, such as squares, triangles or the like. These wall sections are on the order of about 0.6 millimeters in thickness and about 0.5 millimeters in width. The thermoplastic material utilized to form this relatively thin apertured top layer exhibits good strength in compression, but is comparatively weak in shear. As a result, shear forces created by front-to-back and/or side-to-side motion along the apertured top layer has a tendency to stretch, pull or otherwise move the wall sections off the top layer relative to one another. The resilient cushioning material within which the apertured top layer is embedded offers substantially no resistance to the application of such shear forces and thus readily permits such relative motion of the wall sections. The apertured top layer is therefore subject to tearing or ripping of its wall sections, and the cushioning material beneath can become worn and break down as the apertured top layer moves therealong.

Another potential problem in the use of the sheet material disclosed in US Patent No. 4,925,724 in certain types of applications is that the apertured top layer can become delaminated from the cushioning layer. As disclosed in such patent, the apertured top layer and cushioning layer are interconnected by introducing the top layer onto the cushioning layer when it is in a "foamed" state, i.e., wherein the material has the consistency or whipped cream or the like before it is cured to a solid sheet. Alternatively, the apertured top layer can be affixed to cushioning materials such as polyurethane which is liquid when initially combined with the top layer and thereafter cures to form a solid layer. In either case, the only connection between the apertured top layer and cushioning layer is the extent of surface contact between the cushioning material and the bottom and sides of the wall sections or the apertured top layer. This is a relatively small surface area. Additionally, the wall sections are made relatively smooth to provide comfort when contacted by the foot, which further increases the difficulty of obtaining a secure bond between the top layer and cushioning layer sufficient to avoid delamination.

The present invention is directed at laminate sheet material, comprising an outer layer formed of a slip-resistant, non-conductive thermoplastic material, the outer layer being formed with a plurality of wall sections which define apertures therebetween. According to the invention, the sheet material comprises a stabilizing layer formed of non-woven fibrous material affixed to the outer layer, the stabilizing layer being effective substantially to reduce movement of the wall sections of the outer layer relative to one another in response to the application of a shear force to the outer layer.

A sheet material according to this invention includes a top layer formed or a non-absorbent, thermally non-conductive thermoplastic material, a stabilizing layer formed of a non-woven material affixed to the top layer, and, in various embodiments, a barrier layer and/or cushioning layer forming a laminate in which the stabilizing layer is sandwiched between the top layer and such other layers. The chemical formulation of the top layer of thermoplastic material can be varied to alter its coefficient of friction or degree of slip resistance depending upon the requirements of a particular application.

One aspect of this invention is predicated upon the concept of increasing the wear life and dimensional stability of the top layer of the sheet material herein. The non-absorbent, thermally non-conductive thermoplastic material which forms the top layer of the sheet material herein includes a plurality of spaced apertures defining strands or wall sections in the top layer between the apertures. These wall sections, preferably in the shape of interconnected squares, triangles or the like, are relatively small, i.e., on the order of about .6 millimeters in height and .5 millimeters in width. While such wall sections are strong in compression, the application of a shear force to the top layer induces the wall sections to stretch and move relative to one another which can cause tearing in the absence of constraint. The non-woven material affixed to the apertured top layer is characterized as a "stabilizing layer" because it provides for dimensional stability of the apertured top layer to resist movement under the application of shear forces. The apertured top layer is preferably glued or otherwise permanently affixed to the stabilizing, non-woven layer such that the wall sections of the apertured top layer are substantially constrained from movement relative to one another under the application of a shear force. This greatly enhances the dimensional integrity and durability of the apertured top layer, particularly when the sheet material is used to fabricate such items as insoles incorporated in articles of footwear intended for active sports wherein the front-to-back and side-to-side motion of the toot upon the insole can be severe.

In addition to the dimensional stability and durability provided by affixing the non-woven, stabilizing layer to the apertured top layer, the stabilizing layer also contributes to the structural integrity of multi-layer sheet material made in accordance with the teachings of this invention. In one embodiment, the surface of the stabilizing layer opposite the apertured top layer is affixed to a cushioning layer such as crosslinked polyethylene, latex foam, or other cushioning materials. The non-woven material forming the stabilizing The non-woven material forming the stabilizing layer may comprise pressed fibers of 100% polyester, a blend of rayon and polyester, or a blend of cellulosic material such as wood pulp and polyester. It his been found that the non-woven fibrous constituents of the non-woven material create an extremely effective bond with cushioning material of the type mentioned above. It is believed that the fibers of the non-woven material at least partially entangle or intertwine with the cushioning material thus providing a comparatively large surface area of contact therebetween so that an extremely secure bond is formed between the non-woven material and the cushioning layer. As a result, sheet material herein which is formed by the laminate of an apertured top layer, a non-woven stabilizing layer and a cushioning layer is securely held together and there is little chance of delamination of any one of the three layers from the others.

In another aspect of this invention, it is recognized that different types of materials are preferable to others in forming the cushioning layer of the sheet material herein depending upon the particular type of activity for which the sheet material is intended. In the fabrication of insoles for shoes, for example, one type of preferred material is polyurethane which is introduced in liquid form into either an "open" mold, which is analogous to a waffle iron, or a closed mold which is analogous to an injection mold to form the insole. In order to combine the polyurethane with the form of the sheet material herein which comprises a laminate of the apertured top layer and the non-woven stabilizing layer, such laminate must be introduced into the mold with the liquid polyurethane. It has been found that in the course of closing the mold halves of the open mold, or in introducing the liquid polyurethane into the closed mold, sufficient pressure is developed to force the liquid polyurethane through the non-woven layer and through the apertures in the apertured top layer of the sheet material. This produces a "bleed-through" problem wherein at least a portion of the polyurethane is located atop the apertured top layer in the form of beads after the polyurethane has cured.

In order to avoid this bleed-through of polyurethane, a "barrier layer" may be affixed to the surface of the non-woven layer opposite the apertured top layer. This barrier layer is preferably a thin layer of acrylic latex, polyethylene, ethylene-vinyl acetate copolymer, vinyl or similar materials which are substantially liquid impervious. The barrier layer is effective to block the flow of the liquid polyurethane during a molding operation using either type of molding apparatus mentioned above, so that there is no bleed-through of the polyurethane into the non-woven layer or into the apertured top layer in the finished insole. This barrier layer is also useful in preventing bleed-through in sheet material having a continuous layer of polyurethane, i.e., wherein liquid polyurethane is dispensed atop the barrier layer portion of a laminate of the apertured top layer, non-woven layer and barrier layer, and then subseqently cured to form a solid, continuous sheet.

It is presently contemplated that such barrier layer may be eliminated in some types of sheet material made in accordance with this invention. For example, sheet material having a cushioning layer of a latex foam or crosslinked polyethylene foam do not require a barrier layer since these materials have a more solid consistency when combined with the apertured top layer and stabilizing layer, e.g., like whipping cream, and do not tend to bleed-through such sheet material prior to curing.

In any of the embodiments of sheet material in accordance with the invention, an important aspect of this invention is predicated upon the frictional characteristics exhibited by the apertured top layer of the sheet material. In one embodiment, the apertured top layer is formed of an ethylene-vinyl acetate copolymer whose vinyl acetate content can be varied to alter the coefficient of friction of the material. Tests have shown that regardless of the vinyl acetate content and resulting coefficient of friction, the apertured top layer of the sheet material in accordance with the invention exhibits the same coefficient of friction wet or dry. This feature of the apertured top layer provides substantial benefits in the functionality of the sheet material, particularly in applications wherein the sheet material is expected to come into contact with moisture but maintain its slip-resistance.

For example, one aspect of the construction of the apertured top layer of the sheet material herein which is particularly advantageous when it is used in the manufacture of footwear insoles involves protection of the foot from blistering and other discomfort caused by movement of the foot with respect to the sock. In such application, the coefficient of friction of the apertured top layer of the sheet material herein is selected such that the magnitude of the frictional engagement between the apertured top layer and sock is less than the magnitude of frictional engagement between the sock and foot. This is true whether or not the apertured top layer is wet or dry. In the environment of the interior of an article of footwear, the objective is to prevent movement of the foot with respect to the sock. By ensuring that the magnitude of the frictional engagement between the apertured top layer of the sheet material and sock is less than that between the sock and foot, the sock and foot are made to move as a unit along the insole while the foot is held substantially fixed with respect to the sock. Because the foot is prevented from sliding within the sock, the rubbing movement of the foot which can cause blisters is substantially eliminated.

Another advantage of the construction of the sheet material herein involves the capability of altering the coefficient of friction of its apertured top layer according to the requirements of a particular application. As mentioned above, the apertured top layer is preferably formed of a non-absorbent, thermally non-conductive thermoplastic material such as a ethylene-vinyl acetate copolymer. By varying the vinyl acetate content of such material, the coefficient of friction of the apertured top layer can be varied to produce a relatively slippery surface, a comparatively tacky or sticky surface, and, anything in between. It is contemplated that in applications for the sheet material herein such as a covering for the decks of swimming pools, the floors of boats, outdoor carpeting, floor mats and the like, the vinyl acetate content of the apertured top layer should be adjusted to produce a "tacky" or highly slip-resistant surface. This assists one in keeping his or her footing on these surfaces and, as discussed above, such coefficient of friction of the apertured top layer does not vary even when it becomes wet. Additionally, the sheet material intended for these types of applications can be fabricated with a relatively thick cushioning layer to provide a measure of shock absorption in the event of a fall on such surface.

Control of the frictional characteristics of the top surface of an insole is important to the comfort, feel and functionality of such insole. The sheet material of this invention is particularly useful in the fabrication of footwear insoles, and the coefficient of friction of its top layer is variable depending upon the type of activity for which the article of footwear is intended. For example, activities such as basketball, racquetball, squash, aerobic exercises and the like are typically played on surfaces such as lacquered hardwood floors which permit little or no movement of the outsole of an article of footwear with respect to such surfaces. The same is true of "Astroturf" or other forms of artificial playing surfaces. Because of the relatively high coefficient of friction of such surfaces, and the design of the outsole of the articles of footwear intended for use on such surfaces, relatively high shear forces are applied to the article of footwear to the foot and sock while playing activities on such surface. On the other hand, many other types of activities do not result in the application of high shear forces to the foot, and considerations such as comfort, feel and control of the shoe are more important. For example, activities such as the play of tennis on clay courts or soccer on grass results in the shoe readily sliding with respect to the playing surface. Running, walking, hiking and similar activities also do not result in the application of comparatively high shear forces to the foot.

Insoles can be fabricated from the sheet material of this invention to accommodate all of the activities mentioned above. In order to avoid the application of undue shear forces to the foot during activities played on high friction surfaces, the coefficient of friction of the apertured top layer of the sheet material herein is reduced to permit at least some sliding motion of the foot and sock along the apertured top layer in response to the application of shear forces. Sheet material used to fabricate insoles for activities which impose lower shear forces on the foot include an apertured top layer whose coefficient of friction is increased. This increases the magnitude of the frictional engagement between the insole and sock to provide an enhanced feeling of control of the article of footwear and improved comfort. But in either of these applications, the coefficient of friction of the apertured top layer of the sheet material is nevertheless controlled so as to ensure that the magnitude of the frictional engagement between the sock and apertured top layer of the sheet material is maintained less than the magnitude of the frictional engagement between the sock and foot during any particular activity. This prevents movement of the foot relative to the sock and thus protects the foot from blistering.

A laminate sheet material in accordance with the invention provides a material which is adapted for such uses as insoles for articles of footwear and various slip-resistant surface coverings , which controls the movement of objects on the top surface of such sheet material, which is resistant to wear and which provides a thermal barrier.

Embodiments of the invention will now be described by way of example and with reference to the accompanying drawings, in which:
Fig. 1 is a plan view of the sheet material according to this invention in which the outline of an insole is schematically depicted;
Fig. 2 is an enlarged plan view of a portion of the apertured top layer included in the sheet material of Fig. 1;
Fig. 3 is a schematic view of a method of making one form of the sheet material herein;
Fig. 3A is an enlarged cross sectional view taken generally of the encircled area 3A-3A of Fig. 3;
Fig. 4 is a schematic view of a method for making another embodiment of the sheet material herein;
Fig. 4A is an enlarged cross sectional view taken generally of the encircled area 4A-4A of Fig. 4;
Fig. 5 is a schematic view of a further method of making another embodiment of the sheet material of this invention;
Fig. 5A is an enlarged cross sectional view taken generally of the encircled area 5A-5A of Fig. 5;
Fig. 6 is a schematic view of a method of making a still further sheet material embodiment of this invention;
Fig. 6A is an enlarged cross sectional view taken generally of the encircled area 6A-6A of Fig. 6;
Fig. 7 is a schematic view of a still further method of making another embodiment of the sheet material herein;
Fig. 7A is an enlarged cross sectional view taken generally of the encircled area 7A-7A of Fig. 7;
Fig. 8 is a still further method of making another embodiment of the sheet material herein; and
Fig. 8A is an enlarged cross sectional view taken generally of the encircled area 8A-8A of Fig. 8.

### Detailed Description of the Invention

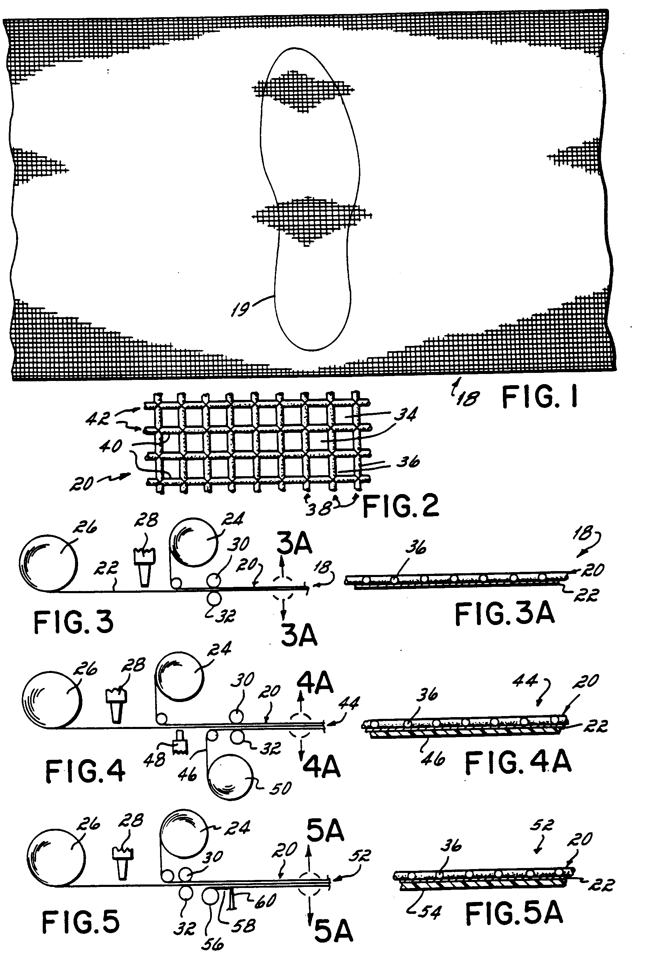

Referring now to Fig. 1, a schematic view of one embodiment of a sheet material 18 is illustrated. The sheet material 18 is schematically depicted with an outline of an insole 19 which can be cut out from the sheet material 18, and which represents one type of an article which can be made from the sheet material 18. This invention is directed to various constructions of sheet material for use in articles such as insoles, indoor-outdoor carpeting, floor coverings for boats, campers and swimming pool decks, floor mats, and other items.

With reference to Figs. 2-3A, the sheet material 18 comprises an apertured top layer 20 affixed to a stabilizing layer 22. In the presently preferred embodiment, the apertured top layer 20 is formed of a non-absorbent, thermally non-conductive thermoplastic material such as an ethylene-vinyl acetate copolymer commercially available from U.S. Industrial Chemicals Company of Tuscola, Illinois under the registered trademark "ULTRATHENE". The ethylene-vinyl acetate is extruded in sheet form, in a configuration described below, and wound on a roll 24. The method of extruding the ethylene-vinyl acetate forms no part of this invention and is therefore not discussed herein. The stabilizing layer 22 is preferably formed of a non-woven material, also described below, which is available in sheet form such as on a roll 26. As schematically depicted in Fig. 3, the sheet material 18 can be formed by applying adhesive from a dispenser 28 onto the stabilizing layer 22 and then combining it with the top layer 20 between a pair of rollers 30, 32. Alternatively, the top layer 20 and stabilizing layer 22 can be combined by heat lamination, i.e., by heating one or both of such layers 20, 22 and then pressing them together.

In the presently preferred embodiment, a quantity of thermoplastic elastomer is added to the ethylene-vinyl acetate copolymer in an effective amount to prevent wrinkling of the sheet material after it is extruded, and in preparation for combination with the stabilizing layer 22. The thermoplastic elastomer content of the top layer 20 is preferably in the range of about 20% to 40% by weight, and more preferably about 25% by weight. One suitable type of thermoplastic elastomer is commercially available under the trade name KRATON D 3226 from Shell Oil Company of Oak Brook, Illinois.

As illustrated in Figs. 2 and 3A, the apertured top layer 20 is formed with a plurality of apertures 34 spaced at regular intervals from one another. These apertures 34 define spaced strands or wall sections 36 of thermoplastic material arranged in side-by-side columns 38, and spaced strands or wall sections 40 of thermoplastic material arranged in side-by-side rows 42.

In one presently preferred embodiment, the apertures 34 in the top layer 20 are substantially square in cross section, i.e., wherein the columns 38 and rows 42 of wall sections 36 and 40, respectively, intersect one another at right angles. It is contemplated, however, that the apertures 34 could be formed in other shapes such as triangular, octagonal, hexagonal and the like. The dimensions of the apertures 34 are not critical, although it is preferable that there be in the range of about 7 to 107 apertures 34 per square centimeter of surface area of the apertured top layer 22. With square apertures 34, this produces a "strand count" in the range of about 1 to 14 strands per lineal centimeter in both directions. It has been found that within this range, a strand count of about 8 to 9 strands per centimeter is acceptable for most applications of the sheet material 18, including the fabrication of insoles 19. An apertured top layer 22 with a "strand count" of 8 to 9 is meant to refer herein to an apertured top layer 22 having 8 to 9 columns 38 of wall sections 36 within one centimeter in a right-to-left direction as viewed in Fig. 2, and 8 to 9 rows 42 of wall sections 40 within one centimeter in a top-to-bottom direction as viewed in Fig. 3. This range of strand counts is not intended to be restrictive of the configuration of top layer 20, but it has been found that such configuration produces a top layer 20 which exhibits good performance properties.

The thickness or height of the wall sections 36 and 40 forming the apertured layer 20, i.e., their largest transverse dimension measured in a vertical plane as viewed in Fig. 3A, for example, is preferably in the range of about .38 to 3.8 millimeters. More preferably, the thickness of such wall sections 36, 40 is about .6 millimeters. The width of the wall sections 36 and 40 measured in a horizontal plane as viewed in Fig. 2 is preferably in the range of about .38 to 3.8 millimeters, and more preferably about .5 millimeters. It is contemplated that the height or thickness dimension, and the width dimension, of the wall sections 36 and 40 could be increased as desired for a particular application. The above ranges of dimensions of the wall sections 36 and 40 are therefore not intended to be restrictive. Additionally, in the embodiment of the sheet material 18 illustrated in Fig. 3A, and in other embodiments discussed below, the wall sections 36 and 40 forming the apertured top layer 20 have a generally circular or at least arcuate-shaped cross section. It is contemplated, however, that the cross section of the wall sections 36, 40 could be square or rectangular in shape depending upon the configuration of the extrusion equipment used to form apertured top layer 20.

In the embodiment of the sheet material 18 illustrated in Fig. 3A, and in each of the other embodiments of this invention discussed below, the stabilizing layer 22 is preferably formed of a non-woven material such as that commercially available under the trademark "SONTARA" from DuPont Sontara of Old Hickory, Tennessee. Non-woven sheet materials are typically formed of petrochemical fibers, cellulosic fibers and/or blends of such fibers. For example, the SONTARA non-woven material is available in sheets of 100% polyester, a blend of 70% rayon and 30% polyester and a blend of 55% cellulosic fibers such as wood pulp fibers and 45% polyester. In one presently preferred embodiment, the stabilizing layer 22 is fabricated from a non-woven sheet of SONTARA Style 8005 which is a 100% polyester non-woven material having a unit weight of 68 grams per square meter and a thickness of .65 millimeters. Additionally, SONTARA Style No. 8801 has been utilized to form stabilizing layer 22 which is a blend of 55% wood pulp and 45% polyester having a unit weight of 68 grams per square meter and a thickness of .41 millimeters.

The sheet material 18 fabricated with an apertured top layer 20 and stabilizing layer 22 of the materials set forth above exhibits exceptional wear characteristics even when used to form an insole 19 wherein the apertured top layer 20 can be subjected to high shear forces exerted by side-to-side, front-to-back and/or twisting movement of the foot thereon. The purpose of the stabilizing layer 22 of non-woven material is to provide dimensional stability to the apertured top layer 20. While the apertured top layer 20 formed of an ethylene-vinyl acetate copolymer exhibits good strength in compression, its wall sections 36 and 40 tend to deform, stretch or otherwise move relative to one another under the application of shear forces. Because the stabilizing layer 22 is glued, heat laminated or otherwise permanently connected to the apertured top layer 20 as depicted in Fig. 3, the wall sections 36, 40 of top layer 20 are securely affixed atop the stabilizing layer 22. The non-woven material forming the stabilizing layer 22 is comparatively strong in shear, and it is effective to stabilize the wall sections 36 and 40 of top layer 20 by substantially constraining their movement relative to one another in response to the application of shear forces to the apertured top layer 20. This substantially reduces tearing or other damage to the wall sections 36, 40 and thus increases the wear life of the apertured top layer 20.

With reference to Figs. 4 and 4A, an alternative embodiment of a sheet material 44 according to this invention is illustrated. The sheet material 44 comprises the same apertured top layer 20 and stabilizing layer 22 of sheet material 18, with the addition of a barrier layer 46. As schematically depicted in Fig. 4, an adhesive dispenser 48 applies a layer of adhesive to the bottom of stabilizing layer 22 unwound from roll 26, and then the barrier layer 46 is unwound from a roll 50 and brought into contact with the stabilizing layer 22 between rolls 30, 32. The apertured top layer 20 is connected to the stabilizing layer 22 in the same manner shown in Fig. 3 and described above. In the presently preferred embodiment, the barrier layer 46 is formed of any one of a variety of substantially moisture impervious materials such as acrylic latex, polyethylene, vinyl, ethylene-vinyl acetate copolymer and the like. Additionally, the barrier layer 46 preferably includes an antimicrobial material having bacteriostatic and fungistatic properties. One suitable antimicrobial material is commercially available under the trademark ULTRAFRESH DM50, distributed by Thomson Research Associates of Toronto, Canada.

A still further alternative embodiment of a sheet material 52 is illustrated in Figs. 5 and 5A. The sheet material 52 is similar to sheet material 44 in that it includes the same apertured top layer 20 and stabilizing layer 22 of sheet material 18, which are combined in the same manner as depicted in Fig. 3, with the addition of a barrier layer 54. In this embodiment, the stabilizing layer 22 is unwound from roll 26, and an acrylic latex is applied by a roller 56 to the bottom of stabilizing layer 22 as indicated at 58. A doctor blade 60, located downstream from roller 56, his employed to level the acrylic latex and form a barrier layer 54 of uniform thickness. Preferably, the barrier layer 54 includes the same antimicrobial material used in barrier layer 46 as described above.

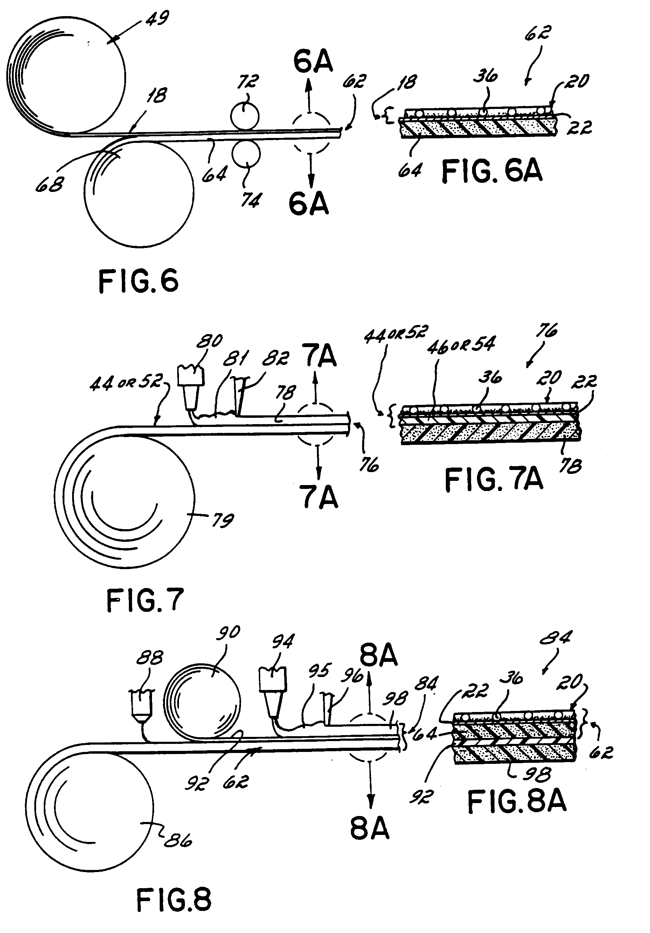

Another alternative embodiment of a sheet material 62 is illustrated in Figs. 6 and 6A which incorporates the same apertured top layer 20 and stabilizing layer 22 of sheet material 18, and further includes a cushioning layer 64. As depicted in Fig. 6, the cushioning layer 64 is unwound from a roll 68 and affixed to the bottom of the stabilizing layer 22 of sheet material 18 by heat lamination, glue or any other suitable means. The sheet material 18 is made as discussed above and shown in Fig. 3, and is unwound from a roll 49 for combination with cushioning layer 64 between rollers 72 and 74. The resulting sheet material 62 is a trilaminate in which the stabilizing layer 22 is sandwiched between the apertured top layer 20 and the cushioning layer 64. The cushioning layer 64 is preferably formed of a resilient, cushioning material such as latex foam or other open cell foam, although cushioning materials such as polyvinyl chloride foam, urethane foam, rubber, polyurethane, crosslinked polyethylene and the like can also be utilized. In addition to the properties exhibited by the sheet material 18 including the top layer 20 and stabilizing layer 22 discussed above, the cushioning layer 64 provides the sheet material 62 with a resilient, cushioning feel upon contact.

With reference to Figs. 7 and 7A, a further embodiment of a sheet material 76 is illustrated which incorporates the apertured top layer 20, stabilizing layer 22 and barrier layer 46 or 54 of the previously described sheet materials 44, 52, respectively, with the further addition of a cushioning layer 78 preferably formed of polyurethane. For purposes of illustration, the sheet material 44 or 52 described above is provided on a roll 79 and unwound so that the barrier layer 46 thereof faces upwardly as depicted in Fig. 7. The polyurethane material forming cushioning layer 78 is deposited by a dispenser 80 onto the barrier layer 46 or 54 in liquid form as represented at 81 in Fig. 7, and then leveled by a doctor blade 82 located downstream from the dispenser 80. When subsequently cured, the polyurethane forms a solid cushioning layer 78 as shown in Fig. 7A. Because the non-woven material forming the stabilizing layer 22 is porous, and the top layer is formed with apertures 34, the presence of the moisture impervious barrier layer 46 is necessary to prevent bleed-through or passage of the liquid polyurethane ejected from dispenser 80 into the stabilizing layer 22 and/or apertured top layer 20 during the sheet forming operation. If the polyurethane was permitted to pass through the apertured top layer 20, and thereafter cured, beads or dots of polyurethane would form atop the finished sheet material 76. The principal purpose of the barrier layers 46 and 54 of sheet materials 44, 52 is therefore to prevent such bleed-through and allow the formation of a sheet material 76 with an acceptably smooth apertured top layer 20.

A still further embodiment of a sheet material 84 according to this invention is illustrated in Figs. 8 and 8A. In this embodiment, the sheet material 62 shown in Fig. 6A and described above is unwound from a roll 86 "upside down", i.e., with the cushioning layer 64 on top as depicted in Fig. 8. An adhesive dispenser 88 applies a layer of adhesive onto the cushioning layer 64 upstream from a roll 90 carrying a barrier layer 92 preferably of the same type as barrier layer 46 of sheet material 44. The barrier layer 92 is bonded to the cushioning layer 64, and then moves downstream beneath a polyurethane dispenser 94. This dispenser 94 deposits liquid polyurethane atop the barrier layer 92, as at 95, which is then leveled by a doctor blade 96 located downstream from the dispenser 94 to form a solid layer 98 of polyurethane when cured. The resulting sheet material 84 has a total of five layers as depicted in Fig. 8A, which is very durable and exhibits exceptional cushioning properties.

In each of the embodiments of the sheet material depicted in Figs. 3-8A, an important aspect of their construction is the frictional characteristics exhibited by the apertured top layer 20. As mentioned above, the apertured top layer 20 is preferably formed of a non-absorbent, thermally non-conductive thermoplastic material such as an ethylene-vinyl acetate copolymer whose vinyl acetate content can be varied to alter the coefficient of friction of such material. In the presently preferred embodiment, the vinyl acetate content of the apertured top layer 20 is varied in the range of about 3% to 40% by weight so as to provide the desired coefficient of friction for a given application. For example, if any of the embodiments of the sheet material described above are to be employed in the formation of mats, floor coverings, outdoor carpeting and the like, particularly sheet materials 62, 76 and 84, the vinyl acetate content of apertured top layer 20 is increased to a level on the order of 12% or higher by weight. This produces an apertured top layer 20 which has a high coefficient of friction and is highly slip-resistant.

As mentioned above, one important application of the sheet materials of this invention is in the fabrication of insoles for articles of footwear, such as insole 19 depicted schematically in Fig. 1. If any of the sheet materials illustrated and described above are employed in the fabrication of insoles, the vinyl acetate content of the apertured top layer 20 can be varied to provide a coefficient of friction such that the magnitude of the frictional engagement between such apertured top layer 20 and the sock of a wearer of the shoe in which the insole is positioned, is maintained less than the magnitude of the frictional engagement between the sock and foot of the wearer. This induces the foot and sock to move as a unit along the apertured top layer 20 of any of the sheet materials herein, in response to the application of shear forces to the foot, instead of allowing the sock to stick to the apertured top layer so that the foot would move relative to the sock. Movement of the foot within the sock should be avoided because it induces the formation of blisters and other foot damage. The capability of controlling the frictional engagement between the apertured top layer 20 of the sheet materials herein and the sock within an article of footwear is an important advantage in the construction of insoles.

Another important aspect of the sheet materials disclosed herein is that the frictional characteristics of the apertured top layer 20 remain substantially constant whether the apertured top layer 20 is wet or dry. This is true over the entire range of different coefficients of friction which can be provided by the apertured top layer 20 as the vinyl acetate content of the ethylene-vinyl acetate copolymer it is made of is varied. In applications where the apertured top layer 20 of the sheet materials herein can become wet, such as within the insole of a shoe, on outdoor mat, a floor covering of a boat, etc., it is an important advantage to provide the same degree of slip-resistance to the foot even after the apertured top layer 20 becomes wet. Additionally, the thermally non-conductive thermoplastic material from which the apertured top layer 20 is constructed provides a thermal barrier between the foot or other object placed on the sheet materials herein, and whatever surface such sheet materials overlie.

For example, the thermoplastic material identified above which is used in forming the apertured top layer 20 of each of the sheet materials 18, 44, 52, 62, 76 and 84, is the ethylene-vinyl acetate copolymer available under the registered trademark ULTRATHENE from U.S. Industrial Chemicals Company of Tuscola, Illinois. This particular material has been found suitable because of its non-absorbent, thermally non-conductive properties, and also because it can be produced in different formulations which exhibit different slip-resistance. It is contemplated, however, that one or more other types of thermoplastic materials and/or thermoplastic elastomers could be employed in forming the apertured top layer 20 of the materials herein so long as they are capable of being formed in the configuration depicted in Fig. 2 and exhibit essentially the same non-absorbent, thermally non-conductive and slip-resistant properties as the ethylene-vinyl acetate copolymer described herein.

## Claims

1. Laminate sheet material, comprising an outer layer (20) formed of a slip-resistant, non-conductive thermoplastic material, the outer layer (20) being formed with a plurality of wall sections (36, 40) which define apertures (34) therebetween, characterised in that the sheet material comprises a stabilizing layer (22) formed of non-woven fibrous material affixed to the outer layer (20), the stabilizing layer (22) being effective substantially to reduce movement of the wall sections (36, 40) of the outer layer (20) relative to one another in response to the application of a shear force to the outer layer (20).

2. Sheet material according to Claim 1 wherein a barrier layer (46, 54) formed of a substantially liquid impervious material is provided, affixed to the stabilizing layer (22).

3. Sheet material according to Claim 1 or Claim 2 wherein a cushioning layer (64, 78) is provided affixed to the stabilizing layer (22) or to the barrier layer (46, 54) where a barrier layer is provided, the barrier layer (46, 54) being effective substantially to prevent bleedthrough of the cushioning layer (64, 78) into the stabilizing layer (22).

4. Sheet material according to Claim 1 wherein a first cushioning layer (64) is provided, affixed to the stabilizing layer (22), in that a barrier layer (92) is provided, affixed to the first cushioning layer (64) and in that a second cushioning layer (98) is provided, affixed to the barrier layer (92), the barrier layer being effective substantially to prevent bleedthrough of the second cushioning layer (98) into any of the other layers.

5. Sheet material according to Claim 2, 3 or 4 wherein a barrier layer (46, 54, 92) is provided which includes an antimicrobial material having bacteriostatic and fungistatic properties.

6. Sheet material according to Claim 3, 4 or 5 comprising at least one cushioning layer (64) affixed to the stabilizing layer (22) and formed of a material selected from the group consisting of latex foam and crosslinked polyethylene foam.

7. Sheet material according to any one of Claims 3, 4, 5 or 6 comprising at least one cushioning layer (78) affixed to the barrier layer (46, 54) and not affixed to the stabilizing layer (22), the at least one cushioning layer (78) being formed of a polyurethane foam.

8. Sheet material according to any preceding claim wherein the outer layer (20) is formed of an ethylene-vinyl acetate copolymer.

9. Sheet material according to Claim 8 wherein the ethylene-vinyl acetate copolymer has a vinyl acetate content between about 3% and 40% by weight.

10. Sheet material according to any preceding claim wherein the outer layer (20) further includes a thermoplastic elastomer.

11. Sheet material according to any preceding claim wherein the outer layer (20) has between about 7 and 107 apertures per square centimetre.

12. Sheet material according to any preceding claim in which the wall sections (36, 40) of the outer layer (20) are formed in spaced rows (42) and columns (38) which intersect so that the apertures (34) are square in shape, and there are between about 1 and 14 columns (38) of wall sections (36) per lineal centimetre and between about 1 and 14 rows (42) of wall sections (40) per lineal centimetre.

13. Sheet material according to any preceding claim wherein the wall sections (36, 40) of the outer layer (20) are between about .38 and 3.8 millimetres in height and width.

14. Sheet material according to any preceding claim wherein the non-woven fibrous material forming the stabilizing layer (22) is selected from the group consisting of polyester, a blend of polyester and rayon, and a blend of cellulosic fibres and polyester.

## Patentansprüche

1. Laminat-Bahnmaterial, umfassend eine Außenschicht (20) aus einem rutschfesten, nicht-leitenden thermoplastischen Material, wobei die Außenschicht (20) mit mehreren Wandabschnitten (36, 40) ausgebildet ist, zwischen denen Öffnungen (34) definiert sind, dadurch gekennzeichnet, daß das Bahnmaterial eine Stabilisierungsschicht (22) aus Faservliesmaterial umfaßt, die an der Außenschicht (20) befestigt ist, wobei die Stabilisierungsschicht (22) bewirkt, daß Relativbewegungen der Wandabschnitte (36, 40) der Außenschicht zueinander als Reaktion auf die Ausübung von Scherkraft auf die Außenschicht (20) wesentlich verringert werden.

2. Bahnmaterial nach Anspruch 1, worin eine aus einem im wesentlichen flüssigkeitsundurchlässigen Material gebildete Sperrschicht (46, 54) an der Stabilisierungsschicht (22) befestigt vorgesehen ist.

3. Bahnmaterial nach Anspruch 1 oder 2, worin eine Dämpfungsschicht (64, 78) an der Stabilisierungsschicht (22) oder, wenn eine Sperrschicht vorgesehen ist, an der Sperrschicht (46, 54) befestigt vorgesehen ist, wobei die Sperrschicht (46, 54) bewirkt, daß ein Durchbluten der Dämpfungsschicht (64, 78) in die Stabilisierungsschicht (22) im wesentlichen verhindert wird.

4. Bahnmaterial nach Anspruch 1, worin eine erste Dämpfungsschicht (64) an der Stabilisierungsschicht (22) befestigt vorgesehen ist, eine Sperrschicht (92) an der ersten Dämpfungsschicht (64) befestigt vorgesehen ist und eine zweite Dämpfungsschicht (98) an der Sperrschicht (92) befestigt vorgesehen ist, wobei die Sperrschicht bewirkt, daß ein Durchbluten der zweiten Dämpfungsschicht (98) in eine der anderen Schichten im wesentlichen verhindert wird.

5. Bahnmaterial nach einem der Ansprüche 2, 3 oder 4, worin eine Sperrschicht (46, 54, 92) vorgesehen ist, die ein antimikrobielles Material mit bakteriostatischen oder fungistatischen Eigenschaften umfaßt.

6. Bahnmaterial nach Anspruch 3, 4 oder 5, umfassend zumindest eine Dämpfungsschicht (64), die an der Stabilisierungsschicht (22) befestigt und aus einem aus der aus Latexschaum und vernetztem Polyethylenschaum bestehenden Gruppe ausgewählten Material gebildet ist.

7. Bahnmaterial nach einem der Ansprüche 3, 4, 5 oder 6, umfassend zumindest eine Dämpfungsschicht (78), die an der Sperrschicht (46, 54) befestigt ist und an der Stabilisierungsschicht (22) nicht befestigt ist, wobei die zumindest eine Dämpfungsschicht (78) aus einem Polyurethanschaum gebildet ist.

8. Bahnmaterial nach einem der vorangegangenen Ansprüche, worin die Außenschicht (20) aus einem Ethylen-Vinylacetat-Copolymer gebildet ist.

9. Bahnmaterial nach Anspruch 8, worin das Ethylen-Vinylacetat-Copolymer einen Vinylacetat-Gehalt zwischen etwa 3 und 40 Gew.-% aufweist.

10. Bahnmaterial nach einem der vorangegangenen Ansprüche, worin die Außenschicht (20) weiters ein thermoplastisches Elastomer umfaßt.

11. Bahnmaterial nach einem der vorangegangenen Ansprüche, worin die Außenschicht (20) zwischen 7 und 107 Öffnungen pro cm² aufweist.

12. Bahnmaterial nach einem der vorangegangenen Ansprüche, worin die Wandabschnitte (36, 40) der Außenschicht (20) in beabstandeten Reihen (42) und Spalten (38) ausgebildet sind, die einander so schneiden, daß die Öffnungen (34) quadratische Form aufweisen, und zwischen etwa 1 und 14 Spalten (38) von Wandabschnitten (36) pro cm Länge und zwischen etwa 1 und 14 Reihen (42) von Wandabschnitten (40) pro cm Länge vorhanden sind.

13. Bahnmaterial nach einem der vorangegangenen Ansprüche, worin die Wandabschnitte (36, 40) der Außenschicht (20) eine Höhe und eine Breite zwischen etwa 0,38 und 3,8 mm aufweisen.

14. Bahnmaterial nach einem der vorangegangenen Ansprüche, worin das die Stabilisierungsschicht (22) bildende Faservliesmaterial aus der aus Polyester, einem Gemisch aus Polyester und Rayon sowie einem Gemisch aus Cellulosefasern und Polyester bestehenden Gruppe ausgewählt ist.

## Revendications

1. Matériau en feuilles stratifié, comprenant une couche extérieure (20) formée d'un matériau thermoplastique non conducteur résistant au glissement, la couche extérieure (20) étant formée avec Une pluralité de sections à parois (36, 40) qui définissent des ouvertures (34) entre elles, caractérisé en ce que le matériau en feuilles comprend une couche stabilisante (22) formée d'un matériau fibreux non tissé fixé à la couche extérieure (20), la couche stabilisante (22) étant substantiellement efficace pour diminuer le mouvement des sections à parois (36, 40) de la couche extérieure (20) les unes par rapport aux autres en réponse à l'application d'une force de cisaillement sur la couche extérieure (20).

2. Matériau en feuilles selon la revendication 1, dans lequel une couche de barrage (46, 54) formée d'un matériau substantiellement étanche aux liquides est fournie, fixée à la couche stabilisante (22).

3. Matériau en feuilles selon la revendication 1 ou la revendication 2, dans lequel une couche amortissante (64, 78) est fournie fixée à la couche stabilisante (22) ou à la couche de barrage (46, 54) où une couche de barrage est fournie, la couche de barrage (46, 54) étant substantiellement efficace pour empêcher le transpercement de la couche amortissante (64, 78) dans la couche stabilisante (22).

4. Matériau en feuilles selon la revendication 1, dans lequel une première couche amortissante (64) est fournie, fixée à la couche stabilisante (22), en ce qu'une couche de barrage (92) est fournie, fixée à la première couche amortissante (64) et en ce qu'une deuxième couche amortissante (98) est fournie, fixée à la couche de barrage (92), la couche de barrage étant substantiellement efficace pour empêcher le transpercement de la deuxième couche amortissante (98) dans une quelconque des autres couches.

5. Matériau en feuilles selon la revendication 2, 3 ou 4, dans lequel une couche de barrage (46, 54, 92) est fournie qui comprend un matériau antimicrobien ayant des propriétés bactériostatiques et fongistatiques.

6. Matériau en feuilles selon la revendication 3, 4 ou 5 comprenant au moins une couche amortissante (64) fixée à la couche stabilisante (22) et formée d'un matériau sélectionné dans le groupe constitué de mousse de latex et de mousse de polyéthylène réticulé.

7. Matériau en feuilles selon l'une quelconque des revendications 3, 4, 5 ou 6 comprenant au moins une couche amortissante (78) fixée à la couche de barrage (46, 54) et qui n'est pas fixée à la couche stabilisante (22), la -au moins une - couche amortissante (78) étant formée d'une mousse de polyuréthane.

8. Matériau en feuilles selon l'une quelconque des revendications précédentes, dans lequel la couche extérieure (20) est formée d'un copolymère d'éthylène-acétate de vinyle.

9. Matériau en feuilles selon la revendication 8, dans lequel le copolymère d'éthylène-acétate de vinyle a une teneur en acétate de vinyle entre environ 3 % et 40 % en poids.

10. Matériau en feuilles selon l'une quelconque des revendications précédentes, dans lequel la couche extérieure (20) comprend en outre un élastomère thermoplastique.

11. Matériau en feuilles selon l'une quelconque des revendications précédentes, dans lequel la couche extérieure (20) a entre environ 7 et 107 ouvertures par centimètre carré.

12. Matériau en feuilles selon l'une quelconque des revendications précédentes, dans lequel les sections à parois (36, 40) de la couche extérieure (20) sont formées en rangées (42) et en colonnes (38) espacées qui se coupent de telle sorte que les ouvertures (34) soient de forme carrée, et qu'il y ait entre environ 1 et 14 colonnes (38) de sections à parois (36) par centimètre linéaire et entre environ 1 et 14 rangées (42) de sections à parois (40) par centimètre linéaire.

13. Matériau en feuilles selon l'une quelconque des revendications précédentes, dans lequel les sections à parois (36, 40) de la couche extérieure (20) ont une hauteur et une largeur respectivement entre environ 0,38 et 3,8 millimètres.

14. Matériau en feuilles selon l'une quelconque des revendications précédentes, dans lequel le matériau fibreux non tissé formant la couche stabilisante (22) est sélectionné dans le groupe constitué de polyester, d'un mélange de polyester et de rayonne, et d'un mélange de fibres cellulosiques et de polyester.
